# EUROPEAN PATENT SPECIFICATION

(11) **EP 2 600 682 B1**
(45) Date of publication and mention of the grant of the patent: **03.05.2017**
(21) Application number: 11822999.6
(22) Date of filing: 24.03.2011
(51) Int. Cl.: H04W 88/02

(54) **METHOD, SYSTEM AND TERMINAL FOR USER PLANE LOCATION AND LOCATION SERVER**
VERFAHREN, SYSTEM UND ENDGERÄT ZUR BENUTZERLOKALISIERUNG UND LOKALISIERUNGSSERVER
PROCÉDÉ, SYSTÈME ET TERMINAL PERMETTANT DE RÉALISER UNE LOCALISATION DANS LE PLAN USAGER ET SERVEUR DE LOCALISATION

(30) Priority: 08.09.2010 CN 201010282141
(43) Date of publication of application: 05.06.2013
(73) Proprietor: ZTE Corporation, Shenzhen, Guangdong 518057 (CN)
(72) Inventor: SHAN, Liang, Shenzhen Guangdong 518057 (CN); LI, Hui, Shenzhen Guangdong 518057 (CN); DING, Zhen, Shenzhen Guangdong 518057 (CN)
(74) Representative: Bugnion Genève
(86) International application number: PCT/CN2011/072123
(87) International publication number: WO 2012/031476

(56) References cited:
- WO-A1-2008/093998
- WO-A1-2009/051339
- CN-A- 101 083 796
- CN-A- 101 160 986
- US-A1- 2006 099 961
- US-A1- 2008 165 716

## Description

### Technical Field

The present invention relates to the field of mobile communication technology, and especially, to a method, system, terminal for user-plane location and a location server.

### Background of the Related Art

As one of characteristics of the service in mobile communication system, location service has been considered as one highlight of the future mobile value-added service. At present, main mobile communication operators of North America, Europe, Asia Pacific, Japan and South Korea and other countries and regions have opened mobile location service. The location service is the most attractive service in mobile value-added services and one of services with all of links of its industrial chain being most complicated as well.

LOC was founded by Open Mobile Architecture (hereafter referred to as OMA) integrating the work of LIF (Location Inter-operability Forum) with the location service of WAP Forum and tasks related to 3GPP R6 LCS stage3 in 2002. Its purpose is to set standards for inter-communication location service, develop a specification for mobile position service and ensure an end-to-end interoperation, and to replace 3GPP and 3GPP2 gradually in roaming service, Le interface and other research fields and become a developer of the main international specification of location service standards. OMA LOC is mainly to develop location techniques that are based on user plane for mobile communication network, the related location parameters in control-plane location techniques of the previous mobile communication network are transmitted in IP channel so as to realize the location, reduce the dependence on core network, reduce coupling and increase flexibility.

At present, OMA LOC group has completed the development of SUPL1.0 (safety user plane location) standards which have been widely used and deployed on the market. Now the work about SUPL2.0 performed by the OMA LOC group is nearing the completion. The location function of SUPL1.0 has been enhanced in SUPL2.0. For example, the location of trigger type has been added, with which the location function in different access networks is supported and all kinds of GNSS (Global Navigation Satellite Systems) are supported. At the same time, the emergency location scheme has been defined in SUPL2.0 now and the corresponding location entity has been also added, namely, E-SLP (Emergency-SUPL Location Platform). In addition, the location function launched by the terminal for other terminals has been realized in SUPL 2.0.

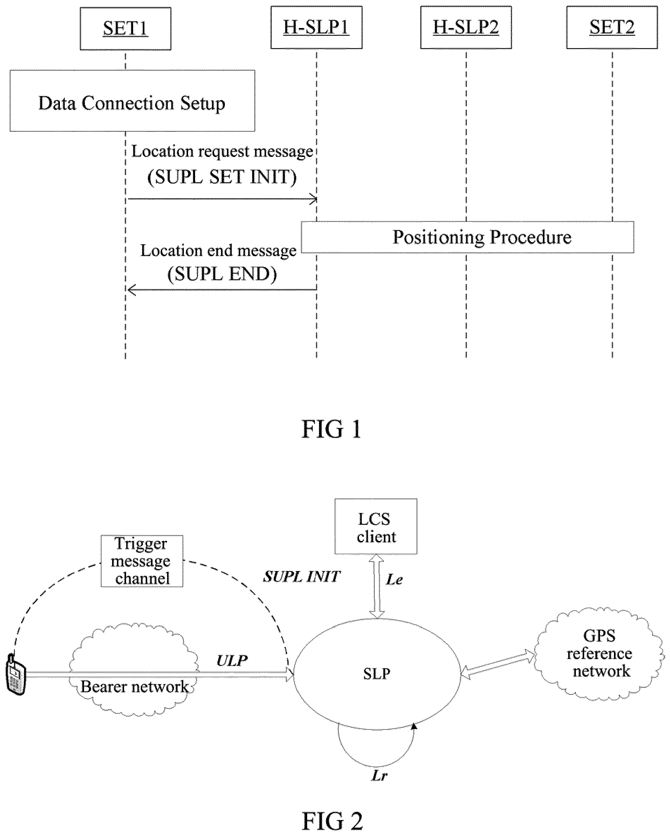

FIG. 1 is the service process that the terminal launches a location function for other terminals, which is defined by the existing SUPL 2.0 standards. First of all, SET1 sets up a safety data connection between itself and its home SLP (namely H-SLP1) and then send SUPL SET INIT message to its home SUPL location server.

According to the location request received, H-SLP1 will judge whether the terminal to be located belongs to the location server first. When it is judged that the terminal doesn't belong to the location server, H-SLP1 will send a roaming location request via Lr reference point and ask other location platforms to help to get the position of the terminal to be located. Supposed that the terminal to be located belongs to the location server, H-SLP1 needs to judge whether the privacy policy of the terminal to be located allows the terminal to be located by the user or not who has initial the request and whether the user terminal supports SUPL location or not. When it is judged that the terminal to be located doesn't belong to the location server but belong to H-SLP2, H-SLP1 needs to send roaming location request message via Lr reference point and ask H-SLP2 to help to get the position of the terminal to be located.

The SET that has initialed the location request needs to wait blindly before H-SLP1 gets the location result, no matter succeeding or not and no matter how long the processing time is. As a result, the user's business experience is not good.

WO 2008/093998 A1 discloses an IP connection is released when a SUPL-based periodic triggered service starts, so as to prevent consumption of network resources. After releasing the IP connection, if a location is measured thereby to generate location information, only the fact that the location has been measured is notified to a requester, and the requester is allowed to receive the location information only when a secure transmission is ensured after the notification, thereby avoiding the location information from being exposed externally.

### Summary of the Invention

The technical problem required to be solved by the present invention is to provide a method, system, terminal for user-plane location and a location server, to improve the user's business experience.

In order to solve the above technical problem, the present invention provides a method for user-plane location according to claim 1.

In order to solve the technical problem, the present invention further provides a system for user-plane location according to claim 4. In order to solve the above technical problem, the present invention further provides a terminal according to claim 7. In order to solve the above technical problem, the present invention further provides a method for user-plane location according to claim 8. In order to solve the above technical problem, the present invention further provides a location server according to claim 11.

### Brief Description of Drawings

FIG. 1 is a flow diagram of the third party's terminal location in the existing specification;
FIG. 2 is a structure diagram of SUPL system provided by the present invention;
FIG. 3 is a schematic diagram of a method for user-plane location according to the present invention;
FIG. 4 is the schematic diagram of a flow according to the example one of the present invention, wherein SET1 always keeps connected during the positioning procedure;
FIG. 5 is the schematic diagram of a flow according to the example two of the present invention, wherein the terminal resets a connection actively when the connection is disconnected during the positioning procedure;
FIG. 6 is the schematic diagram of a flow according to example three of the present invention, wherein H-SLP1 triggers the terminal to reset a connection when the connection is disconnected during the positioning procedure;
FIG. 7 is the schematic diagram of a flow according to example four of the present invention, wherein H-SLP1 triggers the terminal to reset a connection when the connection is disconnected during the positioning procedure;
FIG. 8 is a schematic diagram of the user-plane location system according to one example of the present invention;
FIG. 9 is a schematic diagram of the user-plane location system according to another example of the present invention.

### Preferred Embodiments of the Present Invention

According to the location flow shown in FIG. 1, if the user's privacy setting shows that the user requires to be notified and a location is allowed only after a confirmation is provided or when H-SLP1 judges that a roaming interface is needed to obtain the position information of the terminal to be located or when H-SLP1 chooses to trigger the terminal to be located to complete the location interaction by sending SUPL INIT message, the following positioning procedure will be time-consuming. However, according to the description of the current service process, H-SLP1 can feedback the position result to the terminal that has initiated the request through SUPL END message only after the whole positioning procedure is over. Therefore, the terminal that has initiated the request can only wait blindly because it doesn't know whether the location server has begun to process the request and when it will get the location result and thus it can only keep the data connection with SUPL location server till the SUPL location server succeeds in the location or returns a failure notice to the user. As a result, the user doesn't had a good experience, especially when the user who has initiated the location requires higher-precision position results and the positioning procedure adopts a time-consuming location method, or when the terminal to be located can be allowed to be located only if a clear confirmation is provided. The user who has initiated the location often needs to wait blindly and the user doesn't know whether the waiting is caused by the location request not being accepted by the server or it is caused due to the reason of the positioning procedure itself.

From the above analysis, we can see that the user hasn't had a good experience mainly because the user is forced to wait blindly and cannot get any feedback information before getting the location result (i.e. success or failure).

The main idea of the user-plane location method, system and terminal and a location server is as follows. After the terminal initiates the location for the third party, before the location server got the location result (location success or location failure), the location server sends location processing information to the terminal that has initiated the location request, so that the terminal is able to learn about the related processing information about the current location request timely and then choose to keep or disconnect the connection.

Here will describe the architecture that the present invention is based on to realize SUPL user-plane location. As shown in FIG. 2, in the architecture, LCS Client serves as the requester initiating the service process at the network side. Since it is not involved in the present technical scheme, it is unnecessary to go into details.

SLP (SUPL Location Platform) is a core part and it is also the SUPL location server controlling the service process. In the user-plane location scheme, SLP has a binding ownership with the terminal to be located. Generally, SLP can judge whether the user belongs to the SLP through the user terminal number. When there are service internetworking relationships among multiple SLPs, these SLPs are connected via Lr reference point. Normally, the specification protocol corresponding to the Lr reference point is RLP (Roaming Location Protocol) defined by OMA LOC. The premise that a certain SLP uses the RLP and asks other SLPs to acquire the position information of the terminal to be located is that the SLP that has initiated the request judges the home SLP of the user as well as the user's corresponding access address, port or URL information according to the user's number information.

Terminals are also a part of the whole user-plane location architecture and must support the ULP (UserPlane Location Protocol) with SUPL location server defined by OMA LOC. In the architecture, each terminal has its home SLP and is presented by H-SLP (Home SLP) or HSLP in the present invention. In the specific positioning procedure, terminals use information in the procedure of setting up data connection to verify a server and ensure the server is a reliable home SUPL location server. The message transmitted by the terminals and SUPL location server through the data connection comprises message defined in all ULP specifications except SUPL INIT message.

In the SUPL location architecture, the data connection between terminals and SUPL location server is generally set up by terminals actively. When the connection between terminals and SUPL server is not finished, SUPL location server needs to inform terminals to finish the job. This function is realized via the trigger message channel of the architecture. It should be noted that, the trigger message channel described here is the abstraction of the specific ways for transmitting the trigger message. For example, five specific ways for transmitting the trigger message have been defined in SUPL 2.0 specifications, namely, MT (Mobile Terminated) short message, WAP Push message, Push message in UDP, and SIP Push message sent by IMS core network in emergency mode and sent by IMS core network in common service mode. Through these specific ways, SUPL location server can send SUPL INIT message to a terminal to trigger the terminal to set up the data connection with the server actively and finish the following user-plane message interaction and location calculation functions when the SUPL location server receives LCS Client or when it believes that it is necessary to send or in case of the external location application request.

SUPL location framework mainly serves for high-precision AGPS (Assisted GPS) and other technologies. The figure only illustrates the GPS reference network required by AGPS location method. Of course, in view of further current and future location methods, other reference data sources, even the network elements of the system of the control plane, for example, the protocol interface with the eNB and MME described in the LTE control plane location specifications can also be interfaced in the architecture. Understandably, the present invention doesn't pay much attention on the sources of the specific data.

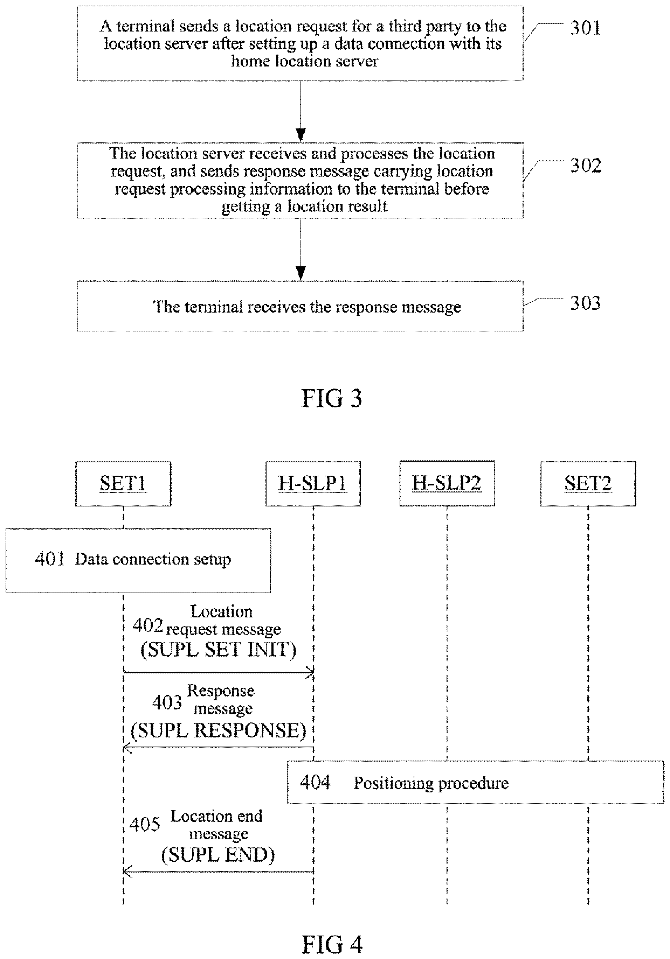

The present invention focuses on: SUPL location server sending location request processing information to the terminal that has initiated the location request after receiving the location request from a terminal and before getting a location result (i.e. success or failure). As shown in FIG. 3, the method comprises:
In step 301, a terminal sends the location request for the third party to the location server after setting up a data connection with the home location server;
In step 302, the location server receives and processes the location request, and sends response message carrying location request processing information to the terminal before getting the location result;
In step 303, the terminal receives the response message.

The specific embodiments of the present invention will be described in detail with reference to the accompanying drawings.

### Example 1

As shown in FIG. 4, in example one, terminal SET1 initiates the location flow for locating the third party SET2 to its home SUPL location server H-SLP1 and the location flow comprises the following steps.

In step 401, SET1 sets up a data connection with H-SLP1;
When the user starts the location application on a terminal and asks to locate another user, the SUPL agent function on the terminal will be started and then begins to set up a safety data connection with the home SLP;
In step 402, SET1 sends location request (SUPL SET INIT) message to H-SLP1;
The SUPL SET INIT message comprises the number identification of the terminal to be located and the position result accuracy, time of completion and other parameters expected by the application that initialed the request.

The SUPL SET INIT message further comprises the session identification part of the terminal distributed by SET1 for the session but excludes the session identification part distributed by the server end. From the point of view of session identification, SUPL SET INIT message is incomplete.

In step 403, H-SLP1 processes the location request received and then sends response message (SUPL RESPONSE);
According to the location request received, H-SLP1 will distribute the session identification part on the server end for the session and forms the complete session identification information together with the session identification part distributed by SET 1.

Furthermore, H-SLP1 needs to judge whether the terminal SET2 to be located belongs to the location server. When it is judged that the terminal SET2 doesn't belong to the location server, H-SLP1 will send a roaming location request via Lr reference point to ask other location platforms to help to get the position of the terminal to be located. If the terminal to be located belongs to the location server, H-SLP1 will need to judge whether the privacy strategy of the terminal SET2 to be located allows the user who has initialed the request to locate the terminal and whether the user terminal can support SUPL location.

When SET2 can support SUPL, H-SLP1 will trigger SET2 to confirm the request and finish the interaction process of getting the position by means of sending SUPL INIT message including possible privacy notices and confirmation elements to the SET2.

When SET2 cannot support SUPL location, H-SLP1 will play an assistant role in getting the confirmation from the terminal to be located for the request through other ways, for example, short message, or acquire the position by means of control plane.

When judging that SET2 doesn't belong to the location server but belongs to H-SLP2, H-SLP1 will send roaming location request message via Lr reference point to H-SLP2 and ask H-SLP2 to help to get the position of SET2.

Before getting the location result, H-SLP1 sends response message to reply to the SET1 that has initiated the request. The response message carries location request processing information that shows the processing progress, the processing mode or the expected processing time and so on.

Information that shows processing progress includes, but is not limited to, the following types: the information that the location request has been received and processed, the information about whether the terminal to be located has received the location request, and the information about whether the privacy confirmation has been sent to the terminal to be located.

Information that shows the processing mode includes, but is not limited to: processing via SUPL.

Preferably, H-SLP1 presets the expected processing time corresponding to different processing situations and then makes the choice and decision according to the related information such as the SET2 location data sources and the privacy setting of SET2. Therefore, the SET1 that has initiated the request can learn about the following possible processing progress and the expected time and keep the connection with H-SLP1.

In step 404, after feeding back response message to the SET1 that has initiated the request, H-SLP1 continues to finish the positioning procedure;

In step 405, after getting the location result, H-SLP1 will send location end message (SUPL END) to SET1, which carries the position information of the terminal SET2 to be located that has been successfully located or the information of location failure.

### Example 2

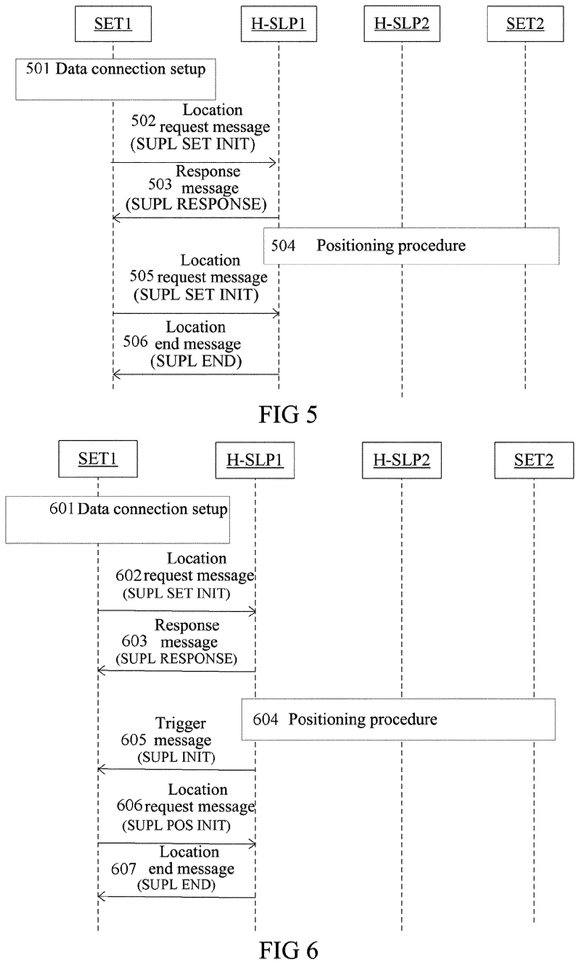

As shown in FIG. 5, in example two, terminal SET1 initiates the location flow for locating the third party SET2 to its home SUPL location server H-SLP1 and the location flow comprises the following steps.

In step 501, SET1 sets up a data connection with H-SLP1;
When the user starts the location application of a terminal and asks to locate another user, the SUPL agent function of the terminal will be started and then begins to set up the safety data connection with its home SLP;
In step 502, SET1 sends location request (SUPL SET INIT) message to H-SLP1;
SUPL SET INIT message comprises the number identification of the terminal to be located and the position result accuracy, time of completion and other parameters expected by the application that initialed the request.

SUPL SET INIT message further comprises the session identification part of the terminal distributed by SET1 for the session but excludes the session identification part distributed by the server end. From the point of view of session identification, SUPL SET INIT message is incomplete.

In step 503, H-SLP1 processes the location request received and then sends response message (SUPL RESPONSE);
According to the location request received, H-SLP1 will distribute the session identification part on the server end for the session and forms complete session identification information together with the session identification part distributed by SET 1.

Furthermore, H-SLP1 needs to judge whether the terminal SET2 to be located belongs to the location server first. When judging that the terminal SET2 doesn't belong to the location server, H-SLP1 will send a roaming location request via Lr reference point to ask other location platforms to help to get the position of the terminal to be located. If the terminal to be located belongs to the location server, H-SLP1 will need to judge whether the privacy strategy of the terminal SET2 to be located allows the user who has initialed the request to locate the terminal and whether the user terminal can support SUPL location.

When SET2 can support SUPL, H-SLP1 will trigger SET2 to confirm the request and finish the interaction process of getting the position by means of sending SUPL INIT message including possible privacy notices and confirmation elements to the SET2.

When SET2 cannot support SUPL location, H-SLP1 will play an assistant role in getting the confirmation from the terminal to be located for the request through other ways, for example, short message, or acquire its position by means of control plane.

When judging that SET2 doesn't belong to the location server but belongs to H-SLP2, H-SLP1 will send roaming location request message via Lr reference point to H-SLP2 and ask H-SLP2 to help to get the position of SET2.

Before getting the location result, H-SLP1 sends response message to reply to the SET1 that has initiated the request, wherein, the response message carries session identification information, and location request processing information that shows the processing progress, the processing mode or the expected processing time and so on.

Information that shows processing progress includes but is not limited to the following types: the information that the location request has been received and processed, the information about whether the terminal to be located has received the location request, and the information about whether the privacy confirmation has been sent to the terminal to be located.

Information that shows the processing mode includes but is not limited to: processing via SUPL.

Preferably, H-SLP1 presets the expected processing time corresponding to different processing situations and then makes the choice and decision according to the related information such as the SET2 location data sources and the privacy setting of SET2. Therefore, the SET1 that has initiated the request can learn about the following possible processing progress and the expected time and choose to keep or disconnect the connection with H-SLP1.

In step 504, after feeding back response message to the SET1 that has initiated the request, H-SLP1 continues to finish the positioning procedure to get the location result and judge whether the connection with the SET1 that has initiated the request is in the state of keeping. If yes, H-SLP1 will perform step 506; otherwise, H-SLP1 will buffer the location result and perform step 505;
In step 505, SET1 resets a connection with H-SLP1 and location request (SUPL SET INIT) message for the third party is re-sent.

Preferably, SET1 resets a data connection with HLP1 after the expected processing time fed back by HLP-S. After setting up the connection, the SET1 that has initiated the location request re-initiates a location request for SET2. In the message, however, session identification part is the complete session identification information of the above response message, so that H-SLP1 judges that the request aims at the location session that hasn't been finished according to the session identification information.

In step 506, H-SLP1 sends location end (SUPL END) message to SET1, which carries the position information of the terminal to be located SET2 that has been successfully located or the information of location failure.

For the case in which the connection is not disconnected, H-SLP1 sends the location end message that carries a location result directly after getting the location result.

For the case in which the connection is disconnected halfway (including the case that SET1 chooses to disconnect or the connection is disconnected by accident) and then is reset, after receiving the location request, H-SLP1 will judge whether the corresponding session positioning procedure has been finished according to session identification information. If it has not been finished, H-SLP1 will repeat step 503 and feed back the response message to SET1 to show what has been processed currently and the expected time of completion. If the corresponding session positioning procedure is over and H-SLP1 has got and buffered the location result, H-SLP1 will bring the location result via the SUPL END message to the terminal user who has initiated the request and the SUPL location session ends.

### Example 3

As shown in FIG. 6, in example three, terminal SET1 initiates the location flow for locating the third party SET2 to its home SUPL location server H-SLP1 and the location flow comprises the following steps.

In step 601, SET1 sets up a data connection with H-SLP1;
When the user starts the location application on a terminal and asks to locate another user, the SUPL agent function of the terminal will be started and then begins to set up a safety data connection with the home SLP;
In step 602, SET1 sends location request (SUPL SET INIT) message to H-SLP1;
SUPL SET INIT message comprises the number identification of the terminal to be located and the position result accuracy, time of completion and other parameters expected by the application that initialed the request.

SUPL SET INIT message further comprises the session identification part of the terminal distributed by SET1 for the session but excludes the session identification part distributed by the server end. From the point of view of session identification, SUPL SET INIT message is incomplete.

In step 603, H-SLP1 processes the location request received and then sends response message (SUPL RESPONSE);
According to the location request received, H-SLP1 will distribute the session identification part of the server end for the session and forms the complete session identification information together with the session identification part distributed by SET1.

Furthermore, H-SLP1 needs to judge whether the terminal SET2 to be located belongs to the location server. When it is judged that the terminal SET2 doesn't belong to the location server, H-SLP1 will send a roaming location request via Lr reference point to ask other location platforms to help to get the position of the terminal to be located. If the terminal to be located belongs to the location server, H-SLP1 will need to judge whether the privacy strategy of the terminal SET2 to be located allows the user who has initialed the request to locate the terminal and whether the user terminal can support SUPL location.

When SET2 can support SUPL, H-SLP1 will trigger SET2 to confirm the request and finish the interaction process of getting the position by means of sending SUPL INIT message including possible privacy notices and confirmation elements to the SET2.

When SET2 cannot support SUPL location, H-SLP1 will play an assistant role in getting the confirmation from the terminal to be located for the request through other ways, for example, short message, or acquire the position by means of control plane.

When it is judged that SET2 doesn't belong to the location server but belongs to H-SLP2, H-SLP1 will send roaming location request message via Lr reference point to H-SLP2 and ask H-SLP2 to help to get the position of SET2.

Before getting the location result, H-SLP1 sends response message to reply to the SET1 that has initiated the request, wherein, the response message carries complete session identification information, and location request processing information that shows the processing progress, the processing mode or the expected processing time and so on.

Information that shows processing progress includes, but is not limited to, the following types: the information that the location request has been received and processed, the information about whether the terminal to be located has received the location request and the information about whether the privacy confirmation has been sent to the terminal to be located.

Information that shows the processing mode includes but is not limited to: processing via SUPL.

Preferably, H-SLP1 presets the expected processing time corresponding to different processing situations and then makes the choice and decision according to the related information such as the SET2 location data sources and the privacy setting of SET2. Therefore, the SET1 that has initiated the request can learn about the following possible processing progress and the expected time and choose to keep or disconnect the connection with H-SLP1.

In step 604, after feeding back response message to the SET1 that has initiated the request, H-SLP1 continues to finish the positioning procedure to get the location result and judge whether the connection with the SET1 that has initiated the request is in the state of keeping. If yes, H-SLP1 will perform step 607; if the connection is disconnected; H-SLP1 will buffer the location result and perform step 605;

In step 605, H-SLP1 sends trigger (SUPL INIT) message to SET1;
When judging that the connection with the SET1 that has initiated the request is disconnected, H-SLP1 can optionally initiates the SUPL INIT trigger message to the terminal that has initiated the request. The complete session identification information is included in the SUPL INIT trigger message and is the same as that in the above response message and is used to show to the terminal that the request aims at a location session that hasn't been completely over. At the same time, optionally, the service type identification is carried in the SUPL INIT trigger message and is used to show that the message is used to trigger to ask the terminal to obtain the acquired location result from the server. Meanwhile, optionally, the clear location type identification is carried in the SUPL INIT trigger message, which is used to show that the message isn't used to trigger the interactive process between the terminal and the location server for getting their own positions once.

In step 606, SET1 reset a connection with H-SLP1 and sends location request (SUPL POS INIT) message;
After receiving the trigger message, SET1 resets the data connection with HLP1. Preferably, the terminal has learned from the trigger message received that the message aims at a location session that hasn't been completely over and the complete session identification information of the session. Correspondingly and optionally, the terminal has learned from the trigger message received that the message is used to trigger the terminal to get one result of a finished positioning procedure from the server, and/or the message isn't used to trigger the interaction procedure for getting their own positions between the terminals and servers.

After setting up the connection, the SET1 that has initiated the location request re-initiates a location request (SUPL POS INIT) for SET2. In the message, the complete session identification information of the above response message is included, so that H-SLP1 judges that the request aims at the location session that hasn't been finished according to the session identification information. Preferably, the clear service identification information is included in the message, which is used to show that the request expects to get the location result that has been buffered on the location server.

In step 607, H-SLP1 sends location end (SUPL END) message to SET1, which carries the position information of the terminal SET2 to be located that has been successfully located or the information of location failure.

For the case in which the connection is not disconnected, H-SLP1 sends location end message that carries a location result directly after getting the location result.

For the case in which the connection is disconnected halfway and then is reset, after receiving the location request, H-SLP1 will judge whether the corresponding session positioning procedure has been finished according to session identification information. If the procedure has not been finished, H-SLP1 will repeat step 603 and feed back the response message to SET1 to show what has been processed currently and the expected time of completion. If the corresponding session positioning procedure is over and H-SLP1 has got and buffered the location result, H-SLP1 will bring the location result via the SUPL END message to the terminal user who has initiated the request and the SUPL location session ends.

### Example 4

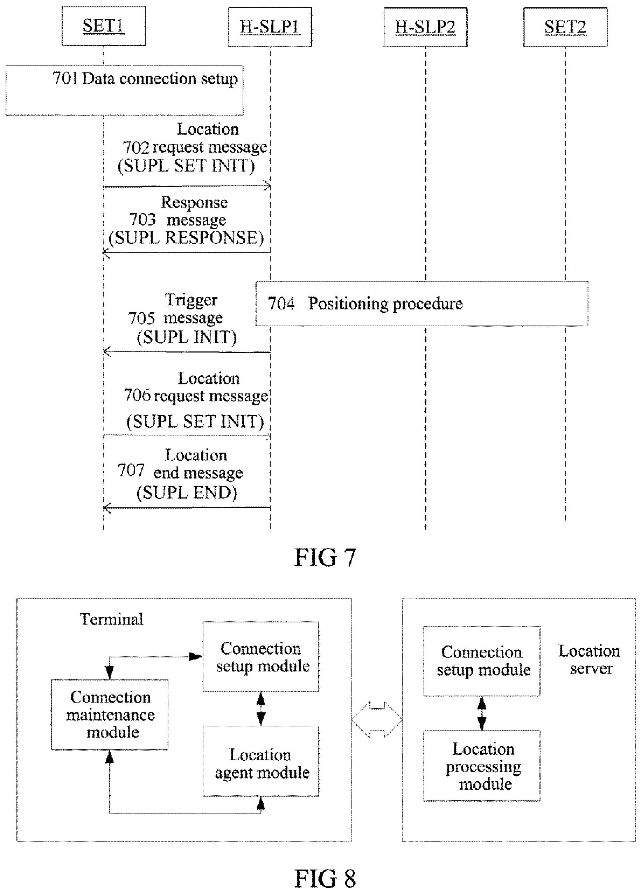

In example four, the terminal SET1 initiates the location flow for locating the third party SET2 to its home SUPL location server H-SLP1, and the location flow is shown in FIG. 7. Compared with example three, steps701-705 and step 707 of example 4 in FIG.7 correspond to steps 601-605 and step 607 of example 3, respectively, except that in step 706, SET1 retransmits location request (SUPL SET INIT) message for the third party; and the session identification part in the message is complete session identification information in the above response message, so that H-SLP1 judges that the request aims at a location session that hasn't been finished according to the session identification information.

In order to realize the above method, the present invention further provides a system for user-plane location, as shown in FIG. 8, the system comprises a terminal and a location server, wherein:
the terminal comprises a connection setup module and a location agent module which are connected, the connection setup module is used to set up a connection with the home location server; and the location agent module is used to send a location request for the third party to the location server and receive response message carrying information of location request processing sent by the location server;
the location server comprises a connection setup module and a location request processing module which are connected, the connection setup module is used to set up a connection with the terminal, the location request processing module is used to: receive and process a location request, and send response message to the terminal before getting the location result.

Preferably, the response message sent by the location server to the terminal further carries complete session identification information;
the connection setup module of the terminal is further used to reset a data connection with the location server actively or passively when the data connection is disconnected halfway; the location agent module is further used to send a location request carrying the complete session identification information to the location server after resetting the data connection with the location server;
the location request processing module of the location server is further used to buffer the location result after getting the location result, receive the location request carrying the complete session identification information sent by the terminal, and is further used to send the buffered location result to the terminal according to complete session identification information in the location request received.

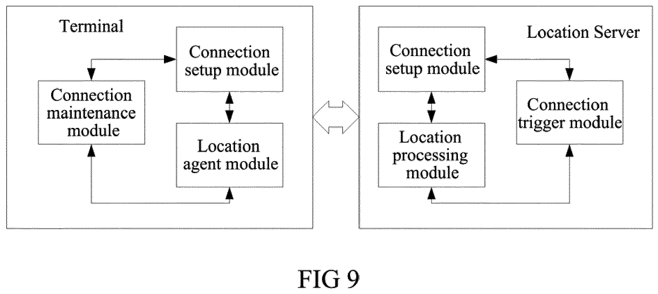

FIG. 9 is another example. What is different from FIG. 8 is that the location server further comprises a connection trigger module connected with the location request processing module, which is used to judge whether the data connection with the terminal is disconnected after getting the location result, and is further used to send trigger message to the terminal to trigger the terminal to reset a connection when judging that the connection is disconnected, the trigger message carries the complete session identification information.

The location request processing information comprises the information which shows the processing progress, the processing mode or the estimated time of completion.

Preferably, as shown in FIG. 8 and FIG. 9, the terminal further comprises a connection maintenance module connected with the connection setup module and the location agent module, which is used to choose to disconnect or keep the connection according to the location request processing information.

Furthermore, the present invention further provides a terminal, the terminal comprises a connection setup module and a location agent module which are connected, wherein:
the connection setup module is used to set up a connection with a home location server of the terminal and is further used to reset a data connection with the location server when the data connection is disconnected halfway;
the location agent module is used to send a location request for a third party to the location server, and receive the response message sent by the location server, which carries location request processing information and complete session identification information; and is further used to send a location request to the location server after resetting a data connection with the location server, which carries the complete session identification information.

Preferably, the terminal further comprises a connection maintenance module connected with the connection setup module and the location agent module, which is used to choose to disconnect or keep the connection according to the location request processing information.

In addition, the present invention further provides a location server. The location server comprises a connection setup module and a location request processing module which are connected. The connection setup module is used to set up a connection with the terminal and the location request processing module is used to receive and process a location request for the third party sent by the terminal and send response message to the terminal before getting the location result.

Preferably, the response message sent by the location server to the terminal carries complete session identification information;
the location request processing module of the location server is further used to buffer the location result after getting the location result, receive the location request carrying the complete session identification information sent by the terminal, and is further used to send the buffered location result to the terminal according to the complete session identification information in the location request received.

Preferably, the location server further comprises a connection trigger module connected with the location request processing module, which is used to judge whether the data connection with the terminal is disconnected after getting the location result, is further used to send trigger message to the terminal to trigger the terminal to reset a connection when judging that the connection is disconnected, the trigger message carries the complete session identification information.

The location request processing information comprises the information which shows a processing progress, a processing mode or an estimated time of completion.

Corresponded to the above location server, the present invention further provides a method for user-plane location, the method comprises:
a location server receiving and processing a location request for a third party sent by a terminal;
before getting a location result, the location server sending response message carrying location request processing information to the terminal.

Preferably, the response message sent by the location server to the terminal further carries complete session identification information; after the location server sends the response message to the terminal, the method further comprises:
the location server getting the location result and buffering the location result;
the location server receiving the location request sent by the terminal, which carries the complete session identification information;
the location server sending the buffered location result to the terminal according to the complete session identification information.

Preferably, after the location server gets the location result and before the location server receives the location request carrying the complete session identification information, the method further comprises:
the location server judging whether the data connection with the terminal is disconnected or not, if disconnected, then sending trigger message carrying the complete session identification information to the terminal to trigger the terminal to reset a connection.

The location request processing information comprises the information which shows a processing progress, a processing mode or an estimated time of completion.

Compared with the related art, in the present invention, after a terminal initiates a location for the third party and before the location server got the location result (location success or location failure), the location server sends location processing information to the terminal that has initiated the location request, for example, the processing information which shows a processing progress, a processing mode or an estimated time of completion, so that the terminal can learn about the processing information related to the current location request timely and thereby choose to keep or disconnect the connection. In addition, before getting a location result, the location server will send complete session identification information of the location session to the terminal. When the data connection set up by the location session is disconnected by accident or the data connection is chosen to be disconnected, the terminal will send the complete session identification information in the location request to the location server, so that the terminal can get the location result which has been buffered by the location server but hasn't been sent to the terminal very quickly so as to improve the efficiency of location and further improve the user's business experience.

It can be appreciated that, in order to achieve the purpose that the user gets the location result of the third party as soon as possible after the location connection is disconnected, the location server just needs to send the complete session identification information to the terminal which has initialed the location alone, which has nothing to do with whether the location processing information has been sent or whether the location processing information is to be sent synchronously. Specifically, the location server sends the complete session identification information to the terminal for backing up after receiving the location request sent by the terminal for the third party and getting the complete session identification information of the location session. After the connection is disconnected, the terminal, actively or being triggered by the location server, resets a connection with the server and sends the location request carrying the complete session identification information to the location server, so that the location server sends the location result to the terminal as soon as possible under the premise of having got the corresponding location result.

Except the case that the location server feeds back the location request processing information when setting up a connection for the first time, extensively, when a connection is reset or the connection is recovered, the location server can also feed back corresponding location request processing information for the location request so that the terminal that has initiated the location learns about the processing information related to the current location request timely.

If the connection is disconnected, a connection is to be reset. If the connection is in keeping state or in suspending state, the connection is to be recovered. It can be appreciated that, the connection being disconnected halfway refers to the situation where a connection corresponding to the location session is disconnected when no location result is obtained.

While recovering the connection, the terminal can also get the location result of the session corresponding to the session identification information by sending session identification information.

The ordinary person skilled in the art can understand that all or part of the steps in the above method can be completed by the program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

The above description is only the preferred examples of the present invention, which is not used to limit the present invention. The present invention can have various modifications and changes for the skilled person in the art. The scope of the invention is defined by the appended claims.

### Industrial Applicability

In the present invention, after the terminal initiates a location for the third party and before the location server got the location result (location success or location failure), the location server sends location processing information to the terminal that has initiated the location request, which enables the terminal to learn about the processing information related to the current location request timely and improves the user's business experience.

## Claims

1. A method for user-plane location, comprising:
a terminal setting up a data connection with a home location server of the terminal (401, 501, 601, 701) and then sending a first location request for a third party to the location server (301, 402, 502, 602, 702);
the location server receiving and processing the first location request and sending response message carrying location request processing information and session identification information to the terminal before getting a location result (302, 403, 503, 603, 703); the location request processing information comprising information which shows an estimated time of completion;
the terminal receiving the response message (303), and the terminal choosing to disconnect or keep the data connection according to the estimated time of completion information comprised in the location request processing information;
the location server getting the location result (404, 504, 604, 704) and judging whether the data connection with the terminal is disconnected or not, if disconnected, then buffering the location result;
when the data connection is disconnected halfway the obtaining of the location result, the terminal resetting a data connection with the location server and sending a second location request carrying the session identification information to the location server (505, 606, 706); and the location server sending the buffered location result of the third party to the terminal according to the session identification information in the second location request received (506, 607, 707).

2. The method according to claim 1, wherein,
after the location server buffers the location result and before the terminal resets the data connection with the location server, the method further comprises: the location server sending trigger message carrying the session identification information to the terminal to trigger the terminal to reset a data connection (605, 705).

3. The method according to any of claims 1 to 2, wherein, the location request processing information further comprises information which shows a processing progress and a processing mode.

4. A system for user-plane location, comprising a terminal and a location server, wherein:
the terminal comprises a first connection setup module and a location agent module which are connected, the first connection setup module is configured to: set up a data connection with a home location server of the terminal; the location agent module is configured to: send a first location request for a third party to the location server and receive response message carrying location request processing information and session identification information sent by the location server, the location request processing information comprising information which shows an estimated time of completion;
the location server comprises a second connection setup module and a location request processing module which are connected, the second connection setup module is configured to: set up a data connection with the terminal, the location request processing module is configured to: receive and process the first location request, and send the response message to the terminal before getting a location result;
wherein the terminal further comprises a connection maintenance module connected with the first connection setup module and the location agent module, the connection maintenance module is configured to: choose to disconnect or keep the data connection according to the estimated time of completion information comprised in the location request processing information;
the first connection setup module of the terminal is further configured to: reset a data connection with the location server when the data connection is disconnected halfway the obtaining of the location result, the location agent module is further configured to: send a second location request carrying the session identification information to the location server after the data connection with the location server is reset by the first connection setup module;
the location request processing module of the location server is further configured to: after getting the location result, buffer the location result if the location server judges that the data connection with the terminal is disconnected, receive the second location request carrying the session identification information sent by the terminal, and send the buffered location result to the terminal according to the session identification information in the second location request received.

5. The system according to claim 4, wherein,
the location server further comprises a connection trigger module connected with the location request processing module, the connection trigger module is configured to: judge whether the data connection with the terminal is disconnected after getting the location result, send trigger message to the terminal to trigger the terminal to reset a data connection when judging that the data connection is disconnected, the trigger message carries the session identification information.

6. The system according to any of claims 4 to 5, wherein, the location request processing information further comprises information which shows a processing progress, or a processing mode.

7. A terminal, comprising a connection setup module and a location agent module which are connected, wherein:
the connection setup module is configured to: set up a data connection with a home location server of the terminal;
the location agent module is configured to: send a first location request for a third party to the location server, and receive the response message sent by the location server, which carries location request processing information and session identification information, the location request processing information comprising information which shows an estimated time of completion;
wherein the terminal further comprises a connection maintenance module connected with the connection setup module and the location agent module, the connection maintenance module is configured to: choose to disconnect or keep the data connection according to the estimated time of completion information comprised in the location request processing information;
the connection setup module is further configured to: reset a data connection with the location server when the data connection is disconnected halfway the obtaining of a location result,
the location agent module is further configured to: send a second location request which carries the session identification information to the location server after the data connection with the location server is reset by the connection setup module.

8. A method for user-plane location, comprising:
a location server receiving and processing a first location request for a third party sent by a terminal (402, 502, 602, 702); and
before getting a location result, the location server sending response message carrying location request processing information and session identification information to the terminal (302, 403, 603, 603, 703), the location request processing information comprising information which shows an estimated time of completion;
the location server getting the location result (404, 504, 604, 704) and judging whether a data connection with the terminal is disconnected or not, if disconnected, then buffering the location result;
the location server receiving a second location request sent by the terminal (505, 606, 706), which carries the session identification information; and
the location server sending the buffered location result to the terminal according to the session identification information (506, 607, 707).

9. The method according to claim 8, wherein,
after the location server buffers the location result and before the location server receives the location request carrying the session identification information, the method further comprises:
the location server sending trigger message carrying the session identification information to the terminal to trigger the terminal to reset a data connection (605, 705).

10. The method according to any of claims 8 to 9, wherein, the location request processing information further comprises information which shows a processing progress, or a processing mode.

11. A location server, comprising a connection setup module and a location request processing module which are connected, wherein the connection setup module is configured to: set up a data connection with a terminal, the location request processing module is configured to: receive and process a first location request for a third party sent by the terminal, and send response message to the terminal before getting a location result, the response message carrying location request processing information and session identification information, the location request processing information comprising information which shows an estimated time of completion;
the location request processing module is further configured to: after getting the location result, buffer the location result if the location server judges that the data connection with the terminal is disconnected, receive a second location request carrying the session identification information sent by the terminal, and send the buffered location result to the terminal according to the session identification information in the second location request received.

12. The location server according to claim 11, wherein,
the location server further comprises a connection trigger module connected with the location request processing module, the connection trigger module is configured to: judge whether the data connection with the terminal is disconnected or not after getting the location result, and send trigger message carrying the session identification information to the terminal to trigger the terminal to reset a data connection when judging that the data connection is disconnected.

13. The location server according to claim 11 or 12, wherein, the location request processing information further comprises information which shows a processing progress, or a processing mode.

## Patentansprüche

1. Verfahren zur Benutzerebenenlokalisierung, Folgendes umfassend:
Aufbauen einer Datenverbindung durch ein Endgerät mit einem Heimstandortserver des Endgerätes (401, 501, 601, 701) und dann Senden einer ersten Standortanfrage für eine dritte Partei an den Standortserver durch das Endgerät (301, 402, 502, 602, 702),
Empfangen und Verarbeiten der ersten Standortanfrage und Senden einer Antwortnachricht, die eine Standortanfrage-Verarbeitungsinformation und eine Sitzungsidentifikationsinformation trägt, an das Endgerät durch den Standortserver, bevor ein Standortergebnis erzielt wird (302, 403, 503, 603, 703), wobei die Standortanfrage-Verarbeitungsinformation Informationen umfasst, die eine geschätzte Zeit bis zum Abschluss anzeigen,
Empfangen der Antwortnachricht (303) durch das Endgerät und Wählen, die Datenverbindung gemäß der Information zur geschätzten Zeit bis zum Abschluss, die in der Standortanfrage-Verarbeitungsinformation enthalten ist, zu trennen oder zu halten, durch das Endgerät,
Erzielen das Standortergebnisses (404, 504, 604, 704) und Entscheiden, ob die Datenverbindung mit dem Endgerät getrennt wurde oder nicht, und Zwischenspeichern des Standortergebnisses bei Trennung durch den Standortserver,
erneutes Aufbauen einer Datenverbindung mit dem Standortserver und Senden einer zweiten Standortanfrage, welche die Sitzungsidentifikationsinformation trägt, an den Standortserver (505, 606, 706) durch das Endgerät und Senden des zwischengespeicherten Standortergebnisses der dritten Partei an das Endgerät gemäß der Sitzungsidentifikationsinformation und der empfangenen zweiten Standortanfrage (506, 607, 707) durch den Standortserver, wenn die Datenverbindung auf halbem Weg zum Erzielen des Standortergebnisses getrennt wurde.

2. Verfahren nach Anspruch 1, wobei das Verfahren nach dem Zwischenspeichern des Standortergebnisses durch den Standortserver und vor dem Neuaufbau der Datenverbindung durch das Endgerät ferner Folgendes umfasst:
Senden einer Auslösenachricht, welche die Sitzungsidentifikationsinformation trägt, durch den Standortserver an das Endgerät, um das Endgerät zu veranlassen, erneut eine Datenverbindung (605, 705) aufzubauen.

3. Verfahren nach einem der Ansprüche 1 bis 2, wobei die Standortanfrage-Verarbeitungsinformation ferner Informationen umfasst, die einen Verarbeitungsfortschritt und einen Verarbeitungsmodus anzeigen.

4. System für eine Benutzerebenenlokalisierung, ein Endgerät und einen Standortserver umfassend, wobei:
das Endgerät ein erstes Verbindungsaufbaumodul und ein Standortermittlermodul umfasst, die verbunden sind, wobei das erste Standortermittlermodul dafür konfiguriert ist, eine Datenverbindung mit einem Heimstandortserver des Endgerätes aufzubauen, und das Standortermittlermodul dafür konfiguriert ist, eine erste Standortanfrage für eine dritte Partei an den Standortserver zu senden und eine vom Standortserver gesendete Antwortnachricht zu empfangen, welche die Standortanfrage-Verarbeitungsinformation und die Sitzungsidentifikationsinformation trägt, welche eine geschätzte Zeit bis zum Abschluss zeigt,
wobei der Standortserver ein zweites Verbindungsaufbaumodul und ein Standortanfrage-Verarbeitungsmodul umfasst, die verbunden sind, wobei das zweite Verbindungsaufbaumodul dafür konfiguriert ist, eine Datenverbindung mit dem Endgerät aufzubauen, und das Standortanfrage-Verarbeitungsmodul dafür konfiguriert ist, die Standortanfrage zu empfangen und zu verarbeiten und die Antwortnachricht an das Endgerät zu senden, bevor ein Standortergebnis erzielt ist,
wobei das Endgerät ferner ein Verbindungsaufrechterhaltungsmodul umfasst, das mit dem ersten Verbindungsaufbaumodul und dem Standortermittlermodul verbunden ist, wobei das Verbindungsaufrechterhaltungsmodul dafür konfiguriert ist, gemäß der Information der geschätzten Zeit bis zum Abschluss, die in der Standortanfrage-Verarbeitungsinformation enthalten ist, das Trennen oder das Halten der Datenverbindung zu wählen,
wobei das erste Verbindungsaufbaumodul des Endgerätes ferner dafür konfiguriert ist, eine Datenverbindung mit dem Standortserver neu aufzubauen, wenn die Datenverbindung auf halbem Weg zum Erzielen des Standortergebnisses getrennt wurde, wobei das Standortermittlermodul ferner dafür konfiguriert ist, eine zweite Standortanfrage, welche die Sitzungsidentifikationsinformation trägt, an den Standortserver zu senden, nachdem die Datenverbindung mit dem Standortserver durch das erste Verbindungsaufbaumodul neu aufgebaut wurde,
wobei das Standortanfrage-Verarbeitungsmodul des Standortservers ferner dafür konfiguriert ist, nach dem Erzielen des Standortergebnisses das Standortergebnis zwischenzuspeichern, wenn der Standortserver entscheidet, dass die Datenverbindung mit dem Endgerät getrennt wurde, die zweite Standortanfrage zu empfangen, welche die vom Endgerät gesendete Sitzungsidentifikationsinformation trägt und das zwischengespeicherte Standortergebnis gemäß der Sitzungsidentifikationsinformation in der empfangenen zweiten Standortanfrage an das Endgerät zu senden.

5. System nach Anspruch 4, wobei der Standortserver ferner ein Verbindungsauslösemodul umfasst, das mit dem Standortanfrage-Verarbeitungsmodul verbunden ist, wobei das Verbindungsauslösemodul dafür konfiguriert ist zu entscheiden, ob die Datenverbindung mit dem Endgerät getrennt wurde, nachdem das Standortergebnis erzielt wurde, und die Auslösenachricht an das Endgerät zu senden, um das Endgerät zu veranlassen, eine Datenverbindung neu aufzubauen, wenn entschieden wurde, dass die Datenverbindung getrennt wurde, wobei die Auslösenachricht die Sitzungsidentifikationsinformation trägt.

6. System nach einem der Ansprüche 4 bis 5, wobei die Standortanfrage-Verarbeitungsinformation ferner Informationen umfasst, die einen Verarbeitungsfortschritt oder einen Verarbeitungsmodus zeigen.

7. Endgerät, ein Verbindungsaufbaumodul und ein Standortermittlermodul umfassend, die verbunden sind, wobei:
das Standortermittlermodul dafür konfiguriert ist, eine Datenverbindung mit einem Heimstandortserver des Endgerätes aufzubauen,
das Standortermittlermodul dafür konfiguriert ist, eine erste Standortanfrage für eine dritte Partei an den Standortserver zu senden und eine vom Standortserver gesendete Antwortnachricht zu empfangen, welche die Standortanfrage-Verarbeitungsinformation und die Sitzungsidentifikationsinformation trägt, wobei die Standortanfrage-Verarbeitungsinformation Informationen umfasst, die eine geschätzte Zeit bis zum Abschluss zeigen,
wobei das Endgerät ferner ein Verbindungsaufrechterhaltungsmodul umfasst, das mit dem Verbindungsaufbaumodul und dem Standortermittlermodul verbunden ist, wobei das Verbindungsaufrechterhaltungsmodul dafür konfiguriert ist, gemäß der Information der geschätzten Zeit bis zum Abschluss, die in der Standortanfrage-Verarbeitungsinformation enthalten ist, das Trennen oder das Halten der Datenverbindung zu wählen,
wobei das Verbindungsaufbaumodul ferner dafür konfiguriert ist, eine Datenverbindung mit dem Standortserver neu aufzubauen, wenn die Datenverbindung auf halbem Weg zum Erzielen des Standortergebnisses getrennt wurde, wobei das Standortermittlermodul ferner dafür konfiguriert ist, eine zweite Standortanfrage, welche die Sitzungsidentifikationsinformation trägt, an den Standortserver zu senden, nachdem die Datenverbindung mit dem Standortserver durch das Verbindungsaufbaumodul neu aufgebaut wurde.

8. Verfahren zur Benutzerebenenlokalisierung, Folgendes umfassend:
Empfangen und Verarbeiten einer von einem Endgerät gesendeten ersten Standortanfrage für eine dritte Partei durch einen Standortserver (402, 502, 602, 702)und
Senden einer Antwortnachricht, welche die Standortanfrage-Verarbeitungsinformation und die Sitzungsidentifikationsinformation trägt, an das Endgerät durch den Standortserver, bevor ein Standortergebnis erzielt ist (302, 403, 603, 603, 703), wobei die Standortanfrage-Verarbeitungsinformation Informationen umfasst, die eine geschätzte Zeit bis zum Abschluss zeigen,
Erzielen des Standortergebnisses (404, 504, 604, 704) und Entscheiden, ob eine Datenverbindung mit dem Endgerät getrennt wurde oder nicht, und bei Trennung Zwischenspeichern des Standortergebnisses durch den Standortserver,
Empfangen einer vom Endgerät gesendeten zweiten Standortanfrage, welche die Sitzungsidentifikationsinformation trägt, durch den Standortserver (505, 506, 706) und
Senden des zwischengespeicherten Standortergebnisses gemäß der Sitzungsidentifikationsinformation durch den Standortserver an das Endgerät (506, 607, 707).

9. Verfahren nach Anspruch 8, wobei das Verfahren nach dem Zwischenspeichern des Standortergebnisses durch den Standortserver und vor dem Empfangen der Standortanfrage, welche die Sitzungsidentifikationsinformation trägt, durch den Standortserver ferner Folgendes umfasst:
Senden einer Auslösenachricht, welche die Sitzungsidentifikationsinformation trägt, durch den Standortserver an das Endgerät, um das Endgerät zu veranlassen, erneut eine Datenverbindung aufzubauen (605, 705).

10. Verfahren nach einem der Ansprüche 8 bis 9, wobei die Standortanfrage-Verarbeitungsinformation ferner Informationen umfasst, die einen Verarbeitungsfortschritt oder einen Verarbeitungsmodus zeigen.

11. Standortserver, ein Verbindungsaufbaumodul und ein Standortanfrage-Verarbeitungsmodul umfassend, die verbunden sind, wobei das Verbindungsaufbaumodul dafür konfiguriert ist, eine Datenverbindung mit einem Endgerät aufzubauen, und das Standortanfrage-Verarbeitungsmodul dafür konfiguriert ist, eine vom Endgerät gesendete erste Standortanfrage für eine dritte Partei zu empfangen und zu verarbeiten und eine Antwortnachricht an das Endgerät zu senden, bevor ein Standortergebnis erzielt ist, wobei die Antwortnachricht die Standortanfrage-Verarbeitungsinformation und die Sitzungsidentifikationsinformation trägt, wobei die Standortanfrage-Verarbeitungsinformation Informationen umfasst, die eine geschätzte Zeit bis zum Abschluss zeigen,
wobei das Standortanfrage-Verarbeitungsmodul ferner dafür konfiguriert ist, nach dem Erzielen des Standortergebnisses das Standortergebnis zwischenzuspeichern, wenn der Standortserver entscheidet, dass die Datenverbindung mit dem Endgerät getrennt wurde, eine vom Endgerät gesendete zweite Standortanfrage zu empfangen, welche die Sitzungsidentifikationsinformation trägt, und das zwischengespeicherte Standortergebnis gemäß der Sitzungsidentifikationsinformation in der empfangenen zweiten Standortanfrage an das Endgerät zu senden.

12. Standortserver nach Anspruch 11, wobei der Standortserver ferner ein Verbindungsauslösemodul umfasst, das mit dem Standortanfrage-Verarbeitungsmodul verbunden ist, wobei das Verbindungsauslösemodul dafür konfiguriert ist zu entscheiden, ob die Datenverbindung mit dem Endgerät getrennt wurde oder nicht, nachdem das Standortergebnis erzielt wurde, und die Auslösenachricht, welche die Sitzungsidentifikationsinformation trägt, an das Endgerät zu senden, um das Endgerät zu veranlassen, eine Datenverbindung neu aufzubauen, wenn entschieden wurde, dass die Datenverbindung getrennt wurde.

13. Standortserver nach Anspruch 11 oder 12, wobei die Standortanfrage-Verarbeitungsinformation ferner Informationen umfasst, die einen Verarbeitungsfortschritt oder einen Verarbeitungsmodus zeigen.

## Revendications

1. Procédé de localisation de plan utilisateur, comprenant les étapes ci-dessous dans lesquelles :
un terminal établit une connexion de données avec un serveur de localisation nominal du terminal (401, 501, 601, 701), et envoie ensuite une première demande de localisation pour un tiers au serveur de localisation (301, 402, 502, 602, 702) ;
le serveur de localisation reçoit et traite la première demande de localisation, et envoie un message de réponse transportant des informations de traitement de demande de localisation et des informations d'identification de session, au terminal, avant d'obtenir un résultat de localisation (302, 403, 503, 603, 703) ; les informations de traitement de demande de localisation comportant des informations qui indiquent un temps estimé d'achèvement ;
le terminal reçoit le message de réponse (303) et le terminal choisit de déconnecter ou de conserver la connexion de données selon les informations de temps estimé d'achèvement incluses dans les informations de traitement de demande de localisation ;
le serveur de localisation obtient le résultat de localisation (404, 504, 604, 704) et détermine si la connexion de données avec le terminal est déconnectée ou non, et si la connexion de données est déconnectée, il met en mémoire tampon le résultat de localisation ;
lorsque la connexion de données est déconnectée à mi-chemin de l'obtention du résultat de localisation, le terminal réinitialise une connexion de données avec le serveur de localisation et envoie une seconde demande de localisation transportant les informations d'identification de session au serveur de localisation (505, 606, 706); et le serveur de localisation envoie le résultat de localisation mis en mémoire tampon du tiers au terminal selon les informations d'identification de session dans la seconde demande de localisation reçue (506, 607, 707).

2. Procédé selon la revendication 1, dans lequel,
après que le serveur de localisation a mis en mémoire tampon le résultat de localisation, et avant que le terminal ne réinitialise la connexion de données avec le serveur de localisation, le procédé comporte en outre l'étape ci-après dans laquelle :
le serveur de localisation envoie un message de déclenchement transportant les informations d'identification de session au terminal, en vue de déclencher la réinitialisation d'une connexion de données (605, 705) par le terminal.

3. Procédé selon l'une quelconque des revendications 1 à 2, dans lequel les informations de traitement de demande de localisation comportent en outre des informations qui indiquent une progression de traitement et un mode de traitement.

4. Système pour une localisation de plan utilisateur, comprenant un terminal et un serveur de localisation, dans lequel :
le terminal comporte un premier module d'établissement de connexion et un module d'agent de localisation qui sont connectés, dans lequel le premier module d'établissement de connexion est configuré de manière à : établir une connexion de données avec un serveur de localisation nominal du terminal ; dans lequel le module d'agent de localisation est configuré de manière à : envoyer une première demande de localisation pour un tiers au serveur de localisation, et recevoir un message de réponse transport des informations de traitement de demande de localisation et des informations d'identification de session envoyées par le serveur de localisation, les informations de traitement de demande de localisation comportant des informations qui indiquent un temps estimé d'achèvement ;
le serveur de localisation comporte un second module d'établissement de connexion et un module de traitement de demandes de localisation qui sont connectés, dans lequel le second module d'établissement de connexion est configuré de manière à : établir une connexion de données avec le terminal, et dans lequel le module de traitement de demandes de localisation est configuré de manière à : recevoir et traiter la première demande de localisation, et envoyer le message de réponse au terminal avant d'obtenir un résultat de localisation ;
dans lequel le terminal comporte en outre un module de maintenance de connexion connecté au premier module d'établissement de connexion et au module d'agent de localisation, dans lequel le module de maintenance de connexion est configuré de manière à : choisir de déconnecter ou de conserver la connexion de données selon les informations de temps estimé d'achèvement incluses dans les informations de traitement de demande de localisation ;
le premier module d'établissement de connexion du terminal est en outre configuré de manière à : réinitialiser une connexion de données avec le serveur de localisation lorsque la connexion de données est déconnectée à mi-chemin de l'obtention du résultat de localisation, dans lequel le module d'agent de localisation est en outre configuré de manière à : envoyer une seconde demande de localisation transportant les informations d'identification de session au serveur de localisation, après que la connexion de données avec le serveur de localisation a été réinitialisée par le premier module d'établissement de connexion ;
le module de traitement de demandes de localisation du serveur de localisation est en outre configuré de manière à : suite à l'obtention du résultat de localisation, mettre en mémoire tampon le résultat de localisation si le serveur de localisation détermine que la connexion de données avec le terminal est déconnectée, recevoir la seconde demande de localisation transportant les informations d'identification de session envoyées par le terminal, et envoyer le résultat de localisation mis en mémoire tampon au terminal selon les informations d'identification de session dans la seconde demande de localisation reçue.

5. Système selon la revendication 4, dans lequel,
le serveur de localisation comporte en outre un module de déclenchement de connexion connecté au module de traitement de demandes de localisation, dans lequel le module de déclenchement de connexion est configuré de manière à : déterminer si la connexion de données avec le terminal est déconnectée suite à l'obtention du résultat de localisation, envoyer un message de déclenchement au terminal en vue de déclencher la réinitialisation d'une connexion de données, par le terminal, lorsqu'il est déterminé que la connexion de données est déconnectée, dans lequel le message de déclenchement transporte les informations d'identification de session.

6. Système selon l'une quelconque des revendications 4 à 5, dans lequel les informations de traitement de demande de localisation comportent en outre des informations qui indiquent une progression de traitement ou un mode de traitement.

7. Terminal comportant un module d'établissement de connexion et un module d'agent de localisation qui sont connectés, dans lequel :
le module d'établissement de connexion est configuré de manière à : établir une connexion de données avec un serveur de localisation nominal du terminal;
le module d'agent de localisation est configuré de manière à : envoyer une première demande de localisation pour un tiers au serveur de localisation, et recevoir le message de réponse envoyé par le serveur de localisation, lequel transporte des informations de traitement de demande de localisation et des informations d'identification de session, les informations de traitement de demande de localisation comportant des informations qui indiquent un temps estimé d'achèvement ;
dans lequel le terminal comporte en outre un module de maintenance de connexion connecté au module d'établissement de connexion et au module d'agent de localisation, dans lequel le module de maintenance de connexion est configuré de manière à : choisir de déconnecter ou de conserver la connexion de données selon les informations de temps estimé d'achèvement incluses dans les informations de traitement de demande de localisation ;
le module d'établissement de connexion est en outre configuré de manière à : réinitialiser une connexion de données avec le serveur de localisation lorsque la connexion de données est déconnectée à mi-chemin de l'obtention d'un résultat de localisation ;
le module d'agent de localisation est en outre configuré de manière à : envoyer une seconde demande de localisation qui transporte les informations d'identification de session, au serveur de localisation, après que la connexion de données avec le serveur de localisation a été réinitialisée par le module d'établissement de connexion.

8. Procédé de localisation de plan utilisateur, comprenant les étapes ci-dessous dans lesquelles :
un serveur de localisation reçoit et traite une première demande de localisation, pour un tiers, envoyée par un terminal (402, 502, 602, 702) ; et
avant d'obtenir un résultat de localisation, le serveur de localisation envoie un message de réponse transportant des informations de traitement de demande de localisation et des informations d'identification de session, au terminal (302, 403, 503, 603, 703), les informations de traitement de demande de localisation comportant des informations qui indiquent un temps estimé d'achèvement ;
le serveur de localisation obtient le résultat de localisation (404, 504, 604, 704) et détermine si une connexion de données avec le terminal est déconnectée ou non, et lorsque la connexion est déconnectée, il met en mémoire tampon le résultat de localisation ;
le serveur de localisation reçoit une seconde demande de localisation envoyée par le terminal (505, 606, 706), laquelle transporte les informations d'identification de session ; et
le serveur de localisation envoie le résultat de localisation mis en mémoire tampon au terminal selon les informations d'identification de session (506, 607, 707).

9. Procédé selon la revendication 8, dans lequel,
après que le serveur de localisation a mis en mémoire tampon le résultat de localisation, et avant que le serveur de localisation ne reçoive la demande de localisation transportant les informations d'identification de session, le procédé comprend en outre les étapes ci-dessous dans lesquelles :
le serveur de localisation envoie un message de déclenchement transportant les informations d'identification de session, au terminal, en vue de déclencher la réinitialisation d'une connexion de données (605, 705) par le terminal.

10. Procédé selon l'une quelconque des revendications 8 et 9, dans lequel les informations de traitement de demande de localisation comportent en outre des informations qui indiquent une progression de traitement ou un mode de traitement.

11. Serveur de localisation, comprenant un module d'établissement de connexion et un module de traitement de demandes de localisation qui sont connectés, dans lequel le module d'établissement de connexion est configuré de manière à : établir une connexion de données avec un terminal, dans lequel le module de traitement de demandes de localisation est configuré de manière à : recevoir et traiter une première demande de localisation, pour un tiers, envoyée par le terminal, et envoyer un message de réponse au terminal avant d'obtenir un résultat de localisation, le message de réponse transportant des informations de traitement de demande de localisation et des informations d'identification de session, les informations de traitement de demande de localisation comportant des informations qui indiquent un temps estimé d'achèvement ;
le module de traitement de demandes de localisation est en outre configuré de manière à : suite à l'obtention du résultat de localisation, mettre en mémoire tampon le résultat de localisation si le serveur de localisation détermine que la connexion de données avec le terminal est déconnectée, recevoir une seconde demande de localisation transportant les informations d'identification de session envoyées par le terminal, et envoyer le résultat de localisation mis en mémoire tampon, au terminal,
selon les informations d'identification de session dans la seconde demande de localisation reçue.

12. Serveur de localisation selon la revendication 11, dans lequel,
le serveur de localisation comporte en outre un module de déclenchement de connexion connecté au module de traitement de demandes de localisation, dans lequel le module de déclenchement de connexion est configuré de manière à :
déterminer si la connexion de données avec le terminal est déconnectée ou non, suite à l'obtention du résultat de localisation, et envoyer un message de déclenchement transportant les informations d'identification de session, au terminal, en vue de déclencher la réinitialisation d'une connexion de données, par le terminal, lorsqu'il est déterminé que la connexion de données est déconnectée.

13. Serveur de localisation selon la revendication 11 ou 12, dans lequel les informations de traitement de demande de localisation comportent en outre des informations qui indiquent une progression de traitement ou un mode de traitement.
